# FASCICULE DE BREVET EUROPEEN

(11) **EP 2 877 387 B1**
(45) Date de publication et mention de la délivrance du brevet: **21.09.2016**
(21) Numéro de dépôt: 13734027.9
(22) Date de dépôt: 28.06.2013
(51) Int. Cl.: B62D 25/02, B62D 29/04, B62D 25/04

(54) **COTE D'HABITACLE DE VEHICULE AUTOMOBILE, DONT LA PARTIE INFERIEURE COMPORTE UN RENFORT DE LONGERON EN MATERIAU COMPOSITE**
KABINENSEITE EINES KRAFTFAHRZEUGS MIT SEITENTRÄGERVERSTÄRKUNG AUS EINEM VERBUNDWERKSTOFF IM UNTEREN TEIL
CABIN SIDE OF A MOTOR VEHICLE, OF WHICH THE LOWER PART COMPRISES A SIDEMEMBER REINFORCEMENT MADE FROM A COMPOSITE MATERIAL

(30) Priorité: 27.07.2012 FR 1257315
(43) Date de publication de la demande: 03.06.2015
(73) Titulaire: Peugeot Citroën Automobiles SA, 78140 Vélizy Villacoublay (FR); Faurecia Automotive Composites, 53810 Changé (FR)
(72) Inventeur: LEROUX, Charles, F-78830 Bullion (FR); AMOSSE, Yannick, F-44470 Carquefou (FR); BOURGOIS, Benjamin, F-59130 Lambersart (FR)
(74) Mandataire: Fosse, Danièle
(86) Numéro de dépôt international: PCT/EP2013/063705
(87) Numéro de publication internationale: WO 2014/016079

(56) Documents cités:
- DE-A1-102010 053 878
- US-A- 3 838 881

## Description

La présente invention revendique la priorité de la demande française 1257315 déposée le 27 juillet 2012.

La présente invention concerne un côté d'habitacle de véhicule automobile dont la partie inférieure comporte un renfort de longeron extérieur en matériau composite. Le document DE 10 2010 053 878 A1 décrit un tel côté d'habitacle.

L'expression « matériau composite » désigne un matériau à base de matière synthétique, thermoplastique ou thermodurcissable renforcée par des fibres, telles que les fibres de verre, de carbone ou de basalte.

Les côtés d'habitacle des véhicules automobiles sont le plus souvent réalisés par emboutissage de tôle en acier ou en aluminium.

Un côté d'habitacle comprend communément une peau extérieure qui recouvre une doublure intérieure.

Cette doublure intérieure comporte à sa partie inférieure, un renfort de longeron extérieur et un renfort de longeron intérieur qui s'étendent entre les deux passages de roue.

Habituellement, ces deux renforts de longeron sont des corps creux en acier ou en aluminium.

Ces deux renforts jouent un rôle essentiel dans la tenue des véhicules aux chocs frontaux et latéraux.

En effet, ces renforts doivent absorber l'énergie de ces chocs par déformation ou ruine des matériaux.

Ces renforts de longeron présentent surtout dans le cas des renforts en acier, l'inconvénient de présenter une masse élevée.

Les matériaux composites ne présentent pas cet inconvénient.

Cependant, contrairement à l'acier, les matériaux composites n'acceptent pas les grandes déformations et se cassent plus tôt que l'acier, c'est-à-dire sous l'effet de chocs présentant une énergie moins élevée.

Le but de la présente invention est de remédier aux inconvénients des côtés d'habitacle réalisés entièrement en acier ou en aluminium.

Ce but est atteint, selon l'invention, grâce à un côté d'habitacle d'un véhicule automobile comprenant une peau extérieure qui recouvre une doublure intérieure, cette dernière comportant à la partie inférieure du côté d'habitacle, un renfort de longeron extérieur et un renfort de longeron intérieur, ces deux renforts s'étendant entre les deux passages de roue, caractérisé en ce que le renfort de longeron extérieur est constitué par une paroi en matériau composite présentant plusieurs ondulations qui s'étendent dans la direction longitudinale dudit renfort de longeron extérieur.

Du fait que les ondulations de la paroi en matériau composite soient dirigées dans le sens de la longueur du renfort de longeron en cas de choc latéral, les ondulations peuvent se déplacer dans une direction perpendiculaire à la longueur du renfort de longeron et ainsi absorber une énergie plus importante avant d'atteindre la limite de rupture.

Ainsi, si les ondulations étaient parallèles à une direction perpendiculaire à la longueur du renfort de longeron, comme décrit par exemple dans le brevet FR 2 859 693, en cas de choc latéral, les ondulations ne pourraient travailler qu'en écrasement et de ce fait la limite de rupture serait atteinte beaucoup plus tôt, c'est-à-dire avec des énergies de choc relativement faibles.

L'épaisseur de la paroi présentant les ondulations, l'amplitude et la distance entre ces ondulations doivent être adaptées en fonction de la tenue au choc recherchée.

De préférence, les ondulations de ladite paroi comprennent au moins deux ondulations dont la partie convexe est dirigée vers l'extérieur et la partie concave est dirigée vers l'intérieur.

Les ondulations peuvent être inégales.

Dans une version préférée de l'invention, le renfort de longeron intérieur est constitué par un corps creux allongé s'étendant entre les deux passages de roue, l'une des faces longitudinales de ce corps creux étant fixée contre la face intérieure de la paroi ondulée du renfort de longeron extérieur.

Ce corps creux peut être en matériau composite comme le renfort de longeron extérieur.

De préférence également, ladite face longitudinale du renfort de longeron intérieur est fixée à au moins deux ondulations adjacentes de la paroi du renfort de longeron extérieur.

Dans un mode de réalisation particulièrement avantageux de l'invention, le bord supérieur du renfort de longeron extérieur présente dans une zone située près du milieu de ce renfort, une partie faisant saillie vers le haut qui est raccordée à un élément de renfort s'étendant vers le haut à l'intérieur du pied milieu.

Cet élément de renfort peut également être en matériau composite.

De préférence, ladite partie faisant saillie comporte une extrémité rétrécie par rapport à sa base et présente au moins une ondulation parallèle auxdites ondulations s'étendant dans la direction longitudinale du renfort de longeron extérieur.

De préférence également, l'extrémité supérieure de ladite partie faisant saillie vers le haut est emboitée dans un évidement dudit élément de renfort.

Selon un autre aspect, l'invention concerne également un véhicule automobile comportant deux côtés d'habitacle selon l'invention.

D'autres particularités et avantages de l'invention apparaîtront encore tout au long de la description ci-après.

Aux dessins annexés, donnés à titre d'exemples, non limitatifs :
- la figure 1 est une vue en élévation montrant la peau extérieure d'un côté d'habitacle de véhicule automobile,
- la figure 2 est une vue en élévation montrant la face extérieure de la doublure du véhicule automobile,
- la figure 3 est une vue en élévation montrant la face intérieure de la doublure représentée sur la figure 2,
- la figure 4 est une vue partielle à échelle agrandie montrant la face extérieure du renfort de longeron extérieur,
- la figure 5 est une vue en coupe à échelle agrandie, suivant le plan V-V de la figure 4,
- la figure 6 est une vue analogue à la figure 5 montrant les déformations subies lors d'un choc latéral des renforts de longeron extérieur et intérieur.

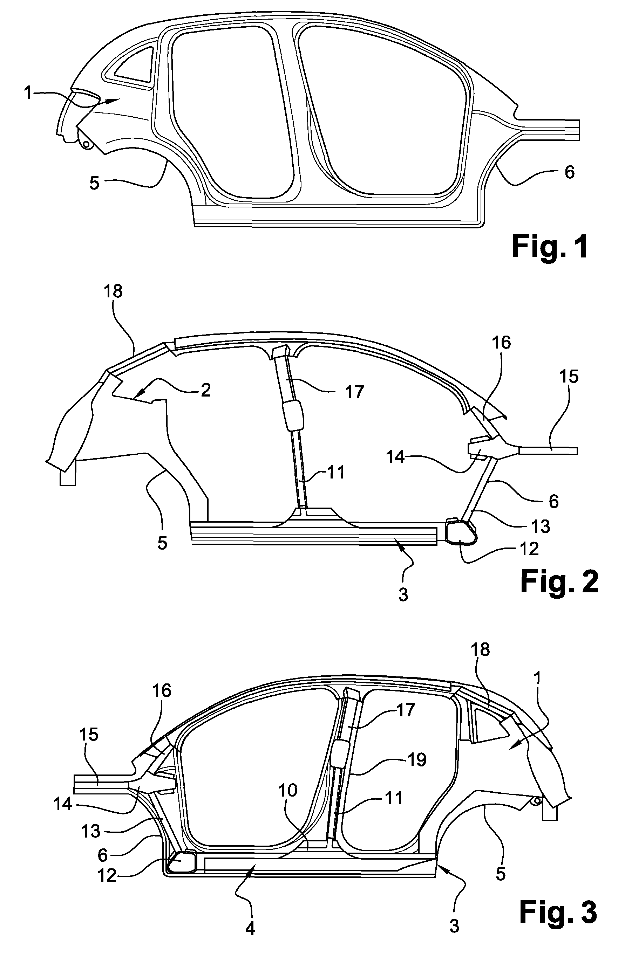

Les figures 1 à 3 représentent un côté d'habitacle d'un véhicule automobile comprenant une peau extérieure 1 (voir figure 1) qui est destinée à recouvrir une doublure intérieure 2 (voir figures 2 et 3).

La doublure intérieure 2 comporte (voir figures 2 à 5) à la partie inférieure du côté d'habitacle, un renfort de longeron extérieur 3 et un renfort de longeron intérieur 4, ces deux renforts 3, 4 s'étendant entre les deux passages de roue 5, 6.

Conformément à l'invention, le renfort de longeron extérieur 3 est constitué par une paroi en matériau composite présentant plusieurs ondulations 7, 8, 9 qui s'étendent dans la direction longitudinale du renfort de longeron extérieur 3.

La réalisation est effectuée à partir d'un ou plusieurs matériaux composites :
- matrices :
   o thermoplastiques : tout polymère, ou mélange de polymères compatibles entre eux, par exemples :
      polyamide, polypropylène,
   o thermodurcissables : tout polymère ou mélange de polymères compatibles entre eux, par exemples :
      polyester, polyuréthane, époxy, vinylester.
- renforts :
   ∘ fibre de verre
   ∘ fibre de basalte
   ∘ fibre de carbone

Les fibres peuvent être sous forme de :
- mats, préparés en plaques, tissus non tissés, ou fibres roving coupées et projetées
- produits tissés
- produits tricotés pour réaliser des préformes tubulaires
- produits extrudés ou pultrudés.
- semi-produits obtenus par réalisation de pré-imprégnés
- fibres pré-imprégnées coupées et projetées

Tous les éléments composites sont assemblés entre eux par collage, collage rivetage, collage clouage ou collage vissage.

Les colles mises en oeuvre peuvent être de type polyuréthane, époxy, méthacrylate ou tout autre permettant une tenue mécanique suffisante.

Dans le cas de fabrication de tous ces éléments en thermoplastique ceux-ci peuvent être assemblés entre eux par soudage suivant tous les procédés (par points, par friction, par ultra-sons, par résistance, par laser etc...).

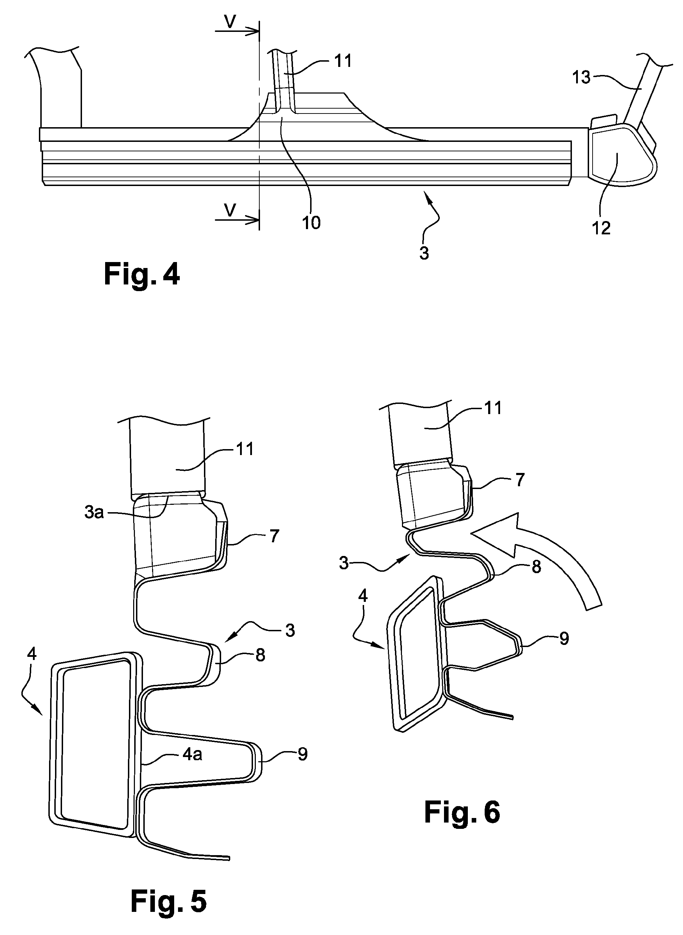

La figure 5 montre que les ondulations de la paroi du renfort de longeron 3 comprennent trois ondulations 7, 8, 9 dont la partie convexe est dirigée vers l'extérieur et la partie concave est dirigée vers l'intérieur.

Les amplitudes et les distances entre les ondulations 7, 8, 9 sont inégales.

Elles peuvent cependant également être égales.

La figure 5 montre que le renfort de longeron intérieur 4 est constitué par un corps creux allongé s'étendant (voir figures 3 et 4) entre les deux passages de roue 5, 6, l'une 4a des faces longitudinales de ce corps creux étant fixée contre la face intérieure de la paroi ondulée du renfort de longeron extérieur 3.

Le corps creux 4 peut également être en matériau composite.

La face longitudinale du renfort de longeron intérieur est fixée à deux ondulations adjacentes 8, 9 de la paroi du renfort de longeron extérieur 3.

Cette fixation peut être effectuée par collage ou par thermosoudage lorsque le matériau composite est à base de matière thermoplastique.

Les renforts 3 et 4 peuvent être réalisés par extrusion ou pultrusion.

L'épaisseur du matériau constituant les renforts 3 et 4 peut varier en fonction de la résistance au choc que l'on veut obtenir.

Il en est de même en ce qui concerne le nombre d'ondulations du renfort 3 et l'amplitude de celles-ci.

Les figures 3 et 4 montrent en outre que le bord supérieur du renfort de longeron extérieur 3 présente dans une zone située près du milieu de ce renfort 3, une partie 10 faisant saillie vers le haut qui est raccordée à un élément de renfort 11 s'étendant vers le haut à l'intérieur du pied milieu 19, comme montré par la figure 3.

Cette partie 10 faisant saillie comporte une extrémité rétrécie par rapport à sa base et présente également des ondulations parallèles aux ondulations 7, 8, 9 s'étendant dans la direction longitudinale du renfort de longeron extérieur 3.

A titre d'exemple, l'extrémité supérieure 3a de la partie 10 faisant saillie vers le haut peut être emboitée dans un évidement de l'élément de renfort 11 et fixée dans cet évidement par collage ou thermosoudage.

Les extrémités avant des renforts de longeron extérieur 3 et intérieur 4 peuvent être fixées par emboitement, collage ou thermosoudage dans un embout 12, comme montré sur les figures 2, 3 et 4.

A cet embout 12 peut être fixé un élément de renfort 13 relié à un autre embout 14 situé sous la baie du pare-brise.

Sur cet embout 14 est fixé un élément de renfort 15 s'étendant vers l'avant et un élément 16 destiné à renforcer un montant latéral du pare-brise.

D'autres éléments de renfort tels que ceux désignés par les références 17 et 18 peuvent être prévus en divers endroits de la caisse du véhicule.

Les éléments de renfort 13, 15, 16, 17 et 18 peuvent, comme l'élément 11, être réalisés en matériau composite.

La peau extérieure 1 du côté d'habitacle peut également être en matériau composite.

Le côté d'habitacle que l'on vient de décrire présente l'avantage de présenter une masse inférieure à celle de côtés d'habitacle emboutis en acier ou en aluminium.

Le côté d'habitacle selon l'invention présente en outre une excellente tenue aux chocs latéraux, bien que la limite élastique de la matière composite soit moins bonne que celle de l'acier.

Ce résultat surprenant s'explique par le fait que les ondulations 7, 8, 9 du renfort de longeron extérieur 3 permettent à celui-ci de s'allonger en cas de choc latéral dans une direction perpendiculaire à la longueur du renfort 3.

Cet allongement permet d'absorber une plus grande partie de l'énergie du choc et de limiter l'intrusion du pied milieu et des portes latérales du véhicule à l'intérieur de ce véhicule.

Cette possibilité d'allongement du renfort 3 dans une direction perpendiculaire à la longueur de ce renfort est favorisée par le fait que la partie supérieure du renfort extérieur 3 est libre par rapport au renfort intérieur 4, comme montré sur la figure 5.

## Revendications

1. Côté d'habitacle d'un véhicule automobile comprenant une peau extérieure (1) qui recouvre une doublure intérieure (2), cette dernière comportant à la partie inférieure du côté d'habitacle, un renfort de longeron extérieur (3) et un renfort de longeron intérieur (4), ces deux renforts (3, 4) s'étendant entre les deux passages de roue (5, 6), **caractérisé en ce que** le renfort de longeron extérieur (3) est constitué par une paroi en matériau composite présentant plusieurs ondulations (7, 8, 9) qui s'étendent dans la direction longitudinale dudit renfort de longeron extérieur (3).

2. Côté d'habitacle selon la revendication 1, **caractérisé en ce que** les ondulations (7, 8, 9) de ladite paroi comprennent au moins deux ondulations dont la partie convexe est dirigée vers l'extérieur et la partie concave est dirigée vers l'intérieur.

3. Côté d'habitacle selon l'une des revendications 1 ou 2, **caractérisé en ce que** les amplitudes des ondulations (7, 8, 9) sont inégales.

4. Côté d'habitacle selon l'une des revendications 1 à 3, **caractérisé en ce que** le renfort de longeron intérieur (4) est constitué par un corps creux allongé s'étendant entre les deux passages de roue (5, 6), l'une (4a) des faces longitudinales de ce corps creux étant fixée contre la face intérieure de la paroi ondulée du renfort de longeron extérieur (3).

5. Côté d'habitacle selon la revendication 4, **caractérisé en ce que** ledit corps creux est en matériau composite.

6. Côté d'habitacle selon l'une des revendications 4 ou 5, **caractérisé en ce que** ladite face longitudinale (4a) du renfort de longeron intérieur (4) est fixée à au moins deux ondulations adjacentes de la paroi du renfort de longeron extérieur (3).

7. Côté d'habitacle selon l'une des revendications 1 à 6, **caractérisé en ce que** le bord supérieur du renfort de longeron extérieur (3) présente dans une zone située près du milieu de ce renfort, une partie (10) faisant saillie vers le haut qui est raccordée à un élément de renfort (11) s'étendant vers le haut à l'intérieur du pied milieu (19).

8. Côté d'habitacle selon la revendication 7, **caractérisé en ce que** ladite partie (10) faisant saillie comporte une extrémité rétrécie par rapport à sa base et présente au moins une ondulation parallèle auxdites ondulations (7, 8, 9) s'étendant dans la direction longitudinale du renfort de longeron extérieur (3).

9. Côté d'habitacle selon l'une des revendications 7 ou 8, **caractérisé en ce que** l'extrémité supérieure (3a) de ladite partie (10) faisant saillie vers le haut est emboitée dans un évidement dudit élément de renfort (11).

10. Véhicule automobile comportant deux côtés d'habitacle selon l'une des revendications 1 à 9.

## Patentansprüche

1. Kabinenseite eines Kraftfahrzeugs, die eine Außenverkleidung (1) umfasst, die ein Innenfutter (2) abdeckt, wobei Letzteres an dem unteren Teil der Kabinenseite eine Verstärkung des äußeren Seitenträgers (3) und eine Verstärkung des inneren Seitenträgers (4) umfasst, wobei sich diese zwei Verstärkungen (3, 4) zwischen den zwei Radläufen (5, 6) erstrecken, **dadurch gekennzeichnet, dass** die Verstärkung des äußeren Seitenträgers (3) aus einer Wand aus Verbundwerkstoff besteht, die mehrere Wellungen (7, 8, 9) aufweist, die sich in die Längsrichtung der Verstärkung des äußeren Seitenträgers (3) erstrecken.

2. Kabinenseite nach Anspruch 1, **dadurch gekennzeichnet, dass** die Wellungen (7, 8, 9) der Wand mindestens zwei Wellungen umfassen, deren konvexer Teil nach außen gerichtet ist, und deren konkaver Teil nach innen gerichtet ist.

3. Kabinenseite nach einem der Ansprüche 1 oder 2, **dadurch gekennzeichnet, dass** die Amplituden der Wellungen (7, 8, 9) ungleich sind.

4. Kabinenseite nach Anspruch 1 bis 3, **dadurch gekennzeichnet, dass** die Verstärkung des inneren Seitenträgers (4) aus einem gestreckten Hohlkörper besteht, der sich zwischen den zwei Radläufen (5, 6) erstreckt, wobei eine (4a) der Längsseiten dieses Hohlkörpers an der Innenseite der welligen Wand der Verstärkung des äußeren Seitenträgers (3) befestigt ist.

5. Kabinenseite nach Anspruch 4, **dadurch gekennzeichnet, dass** der Hohlkörper aus Verbundwerkstoff besteht.

6. Kabinenseite nach einem der Ansprüche 4 oder 5, **dadurch gekennzeichnet, dass** die Längsseite (4a) der Verstärkung des inneren Seitenträgers (4) an mindestens zwei benachbarten Wellungen der Wand der Verstärkung des äußeren Seitenträgers (3) befestigt ist.

7. Kabinenseite nach einem der Ansprüche 1 bis 6, **dadurch gekennzeichnet, dass** der obere Rand der Verstärkung des äußeren Seitenträgers (3) in einem Bereich, der nahe der Mitte dieser Verstärkung liegt, einen Teil (10) aufweist, der nach oben vorsteht, der an ein Verstärkungselement (11) angeschlossen ist, das sich im Inneren des Mittenfußes (19) nach oben erstreckt.

8. Kabinenseite nach Anspruch 7, **dadurch gekennzeichnet, dass** der vorstehende Teil (10) ein Ende aufweist, das in Bezug zu seiner Basis verjüngt ist und mindestens eine Wellung parallel zu den Wellungen (7, 8, 9), die sich in die Längsrichtung der Verstärkung des äußeren Seitenträgers (3) erstrecken, aufweist.

9. Kabinenseite nach einem der Ansprüche 7 oder 8, **dadurch gekennzeichnet, dass** das obere Ende (3a) des Teils (10), der nach oben vorsteht, in eine Aussparung des Verstärkungselements (11) eingerastet ist.

10. Kraftfahrzeug, das zwei Kabinenseiten nach einem der Ansprüche 1 bis 9 umfasst.

## Claims

1. A cabin side of a motor vehicle including an outer skin (1) that covers an inner lining (2), the latter comprising at the lower part of the cabin side an outer sidemember reinforcement (3) and an inner sidemember reinforcement (4), these two reinforcements (3, 4) extending between the two wheel arches (5, 6), **characterized in that** the outer sidemember reinforcement (3) is constituted by a wall made from a composite material having multiple corrugations (7, 8, 9) which extend in the longitudinal direction of said outer sidemember reinforcement (3).

2. The cabin side according to Claim 1, **characterized in that** the corrugations (7, 8, 9) of said wall include at least two corrugations, the convex portion of which is directed toward the exterior and the concave portion of which is directed toward the interior.

3. The cabin side according to one of Claims 1 or 2, **characterized in that** the amplitudes of the corrugations (7, 8, 9) are unequal.

4. The cabin side according to one of Claims 1 to 3, **characterized in that** the inner sidemember reinforcement (4) is constituted by an elongated hollow body extending between the two wheel arches (5, 6), one (4a) of the longitudinal faces of this hollow body being fixed against the interior face of the corrugated wall of the outer sidemember reinforcement (3).

5. The cabin side according to Claim 4, **characterized in that** said hollow body is made from a composite material.

6. The cabin side according to one of Claims 4 or 5, **characterized in that** said longitudinal face (4a) of the inner sidemember reinforcement (4) is fixed to at least two adjacent corrugations of the wall of the outer sidemember reinforcement (3).

7. The cabin side according to one of Claims 1 to 6, **characterized in that** the upper edge of the outer sidemember reinforcement (3) has in a zone situated close to the centre of this reinforcement, a portion (10) projecting upward which is connected to a reinforcement element (11) extending upward in the interior of the centre pillar (19).

8. The cabin side according to Claim 7, **characterized in that** said projecting portion (10) comprises an end which is narrowed with respect to its base and has at least one corrugation parallel to said corrugations (7, 8, 9) extending in the longitudinal direction of the outer sidemember reinforcement (3).

9. The cabin side according to one of Claims 7 or 8, **characterized in that** the upper end (3a) of said upward-projecting portion (10) is fitted into a recess of said reinforcement element (11).

10. A motor vehicle comprising two cabin sides according to one of Claims 1 to 9.
